# EUROPÄISCHE PATENTANMELDUNG

(11) **EP 3 653 365 A1**
(43) Veröffentlichungstag der Anmeldung: **20.05.2020**
(21) Anmeldenummer: 19209903.4
(22) Anmeldetag: 19.11.2019
(51) Int. Cl.: B29C 65/14, B29C 65/48

(54) **VERFAHREN ZUM STOFFSCHLÜSSIGEN VERBINDEN EINES KUNSTSTOFF-BAUTEILS MIT EINEM WEITEREN BAUTEIL**

(30) Priorität: 19.11.2018 DE 102018128969
(71) Anmelder: REHAU AG + Co, 95111 Rehau (DE)
(72) Erfinder: Trenz, Philipp, 95448 Bayreuth (DE)

(57) **Zusammenfassung**

Die Erfindung betrifft ein Verfahren zum stoffschlüssigen Verbinden eines Kunststoff-Bauteiles (1) mit einem weiteren Bauteil (2), umfassend die folgenden Schritte: Bereitstellen eines Kunststoff-Bauteiles (1) aus einem für Mikrowellenstrahlung transparenten Kunststoffmaterial, wobei das Kunststoff-Bauteil (1) wenigstens eine für eine Verklebung geeignete Verklebungsfläche (3) aufweist, Bereitstellen wenigstens eines weiteren Bauteils (2), wobei das weitere Bauteil (2) wenigstens eine für eine Verklebung geeignete weitere Verklebungsfläche (4) aufweist, Applizieren eines eine Mikrowellenstrahlung absorbierenden Klebstoffes (5) auf die Verklebungsfläche (3) des Kunststoffbauteils (1) und/oder auf die weitere Verklebungsfläche (4) des weiteren Bauteils (2), Anordnen der Verklebungsfläche (3) des Kunststoff-Bauteiles (1) in Relation zu der Verklebungsfläche (4) des weiteren Bauteils (2) in einer Position in der sich die Verklebungsflächen (3, 4) gegenüberliegen, Verbinden der beiden Verklebungsflächen (3, 4) durch den applizierten Klebstoff (5), Bereitstellen von Mikrowellenstrahlung im Bereich der Verklebungsflächen (3, 4) und Erwärmen und/oder Aushärten des Klebstoffes (5) durch Bestrahlen des Klebstoffes (5) mit der bereitgestellten Mikrowellenstrahlung, um die stoffschlüssige Verbindung zwischen dem Kunststoff-Bauteil (1) und dem weiteren Bauteil (2) zu realisieren, wobei das Bereitstellen der Mikrowellenstrahlung mittels wenigstens eines Halbleiter-Mikrowellengenerators (6) erfolgt.

## Beschreibung

Die vorliegende Erfindung betrifft ein Verfahren zum stoffschlüssigen Verbinden eines Kunststoff-Bauteils mit einem weiteren Bauteil. Das Verfahren umfasst die folgenden Schritte:
- Bereitstellen eines Kunststoff-Bauteiles aus einem für Mikrowellenstrahlung transparenten Kunststoffmaterial, wobei das Kunststoff-Bauteil wenigstens eine für eine Verklebung geeignete Verklebungsfläche aufweist,
- Bereitstellen wenigstens eines weiteren Bauteils, wobei das weitere Bauteil wenigstens eine für eine Verklebung geeignete weitere Verklebungsfläche aufweist,
- Applizieren eines eine Mikrowellenstrahlung absorbierenden Klebstoffes auf die Verklebungsfläche des Kunststoffbauteils und/oder auf die weitere Verklebungsfläche des weiteren Bauteils,
- Anordnen der Verklebungsfläche des Kunststoff-Bauteiles in Relation zu der Verklebungsfläche des weiteren Bauteils in einer Position in der sich die Verklebungsflächen gegenüberliegen,
- Verbinden der beiden Verklebungsflächen über den applizierten Klebstoff,
- Bereitstellen von Mikrowellenstrahlung im Bereich der Verklebungsflächen und Erwärmen und/oder Aushärten des Klebstoffes durch Bestrahlen des Klebstoffes mit der bereitgestellten Mikrowellenstrahlung, um die stoffschlüssige Verbindung zwischen dem Kunststoff-Bauteil und dem weiteren Bauteil zu realisieren.

Ein Verfahren welches diese gattungsgemäßen Schritte umfasst kann sowohl dem Dokument DE 10 2012 009 386 A1, als auch dem Dokument DE 10 2005 019 780 A1 entnommen werden.

Nachteilig an dem aus dem Stand der Technik vorbekannten Verfahren ist, dass für die Bereitstellung der Mikrowellenstrahlung ein relativ großer Bauraum beansprucht wird und eine homogene Temperaturverteilung in dem Klebstoff nicht oder nur mit einer sehr aufwändigen Anlagentechnik und Anlagensteuerung möglich ist. Insbesondere bei mit einer Lackschicht versehenen Kunststoff-Bauteilen und/oder bei dünnwandigen Kunststoff-Bauteilen wie sie in der Automobilindustrie üblich sind, ist ein Einsatz des Verfahrens aus vorgenannten Gründen nicht möglich, da es zu einer thermischen Schädigung der Lackschicht bzw. des Kunststoffbauteils kommt.

Aufgabe der vorliegenden Erfindung ist es daher ein Verfahren, sowie ein Werkzeug zum Durchführen des Verfahrens anzugeben, welches die Nachteile des Stands der Technik behebt und einen gleichmäßigen Temperatureintrag in den Klebstoff ermöglicht.

Diese Aufgabe wird vorliegend gelöst durch ein Verfahren zum stoffschlüssigen Verbinden eines Kunststoff-Bauteiles mit einem weiteren Bauteil, umfassend die folgenden Schritte:
- Bereitstellen eines Kunststoff-Bauteiles aus einem für Mikrowellenstrahlung transparenten Kunststoffmaterial, wobei das Kunststoff-Bauteil wenigstens eine für eine Verklebung geeignete Verklebungsfläche aufweist,
- Bereitstellen wenigstens eines weiteren Bauteils, wobei das weitere Bauteil wenigstens eine für eine Verklebung geeignete weitere Verklebungsfläche aufweist,
- Applizieren eines eine Mikrowellenstrahlung absorbierenden Klebstoffes auf die Verklebungsfläche des Kunststoffbauteils und/oder auf die weitere Verklebungsfläche des weiteren Bauteils,
- Anordnen der Verklebungsfläche des Kunststoff-Bauteiles in Relation zu der Verklebungsfläche des weiteren Bauteils in einer Position in der sich die Verklebungsflächen gegenüberliegen,
- Verbinden der beiden Verklebungsflächen durch den applizierten Klebstoff,
- Bereitstellen von Mikrowellenstrahlung im Bereich der Verklebungsflächen und Erwärmen und/oder Aushärten des Klebstoffes durch Bestrahlen des Klebstoffes mit der bereitgestellten Mikrowellenstrahlung, um die stoffschlüssige Verbindung zwischen dem Kunststoff-Bauteil und dem weiteren Bauteil zu realisieren,
wobei das Bereitstellen der Mikrowellenstrahlung mittels wenigstens eines Halbleiter-Mikrowellengenerators erfolgt.

Durch die Verwendung wenigstens eines Halbleiter-Mikrowellengenerators ist es in dem erfindungsgemäßen Verfahren möglich die Mikrowellenstrahlung homogener und zielgerichteter in den Mikrowellenstrahlung absorbierenden Klebstoff einzubringen, wodurch das Erwärmen und/oder Aushärten des Klebstoffes entsprechend gleichmäßiger und ohne lokale Überhitzung erfolgt. Der weitere Vorteil der Verwendung eines Halbleiter-Mikrowellengenerators liegt darin begründet, dass sich die Energieabgabe des Halbleiter-Mikrowellengenerators sehr genau regeln lässt, da sich der Halbleiter und/oder die Antenne des Mikrowellengenerator nicht nur als Emitter der Mikrowellenstrahlung, sondern auch als Empfänger der Mikrowellenstrahlung verwenden lässt, sodass über die Messung der rückgestreuten Mikrowellenstrahlung die in den Klebstoff einzubringende Energie auf den Sollwert angehoben oder abgesenkt werden kann.

Das Kunststoff-Bauteil kann ein Verkleidungsteil für ein Kraftfahrzeug sein, insbesondere eine Radlaufblende, eine Zierleiste, ein Zierelement, ein Türkantenschutz, ein Türunterkantenschutz, eine Abdeckleiste, eine Säulenblende, eine Seitenschutzleiste, eine Schwellerverkleidung, eine Stoßfängerverkleidung, eine Türverkleidung, eine Heckklappe, ein Kotflügel, ein Spoiler, eine Dachbeplankung, eine Halteschiene, eine Dichtungsleiste oder eine Wasserkastenabdeckung sein.

Das weitere Bauteil kann ein Verstärkungsteil für ein Verkleidungsteil eines Kraftfahrzeuges sein, insbesondere ein Verstärkungsteil für eine Radlaufblende, ein Verstärkungsteil für eine Zierleiste, ein Verstärkungsteil für ein Zierelement, ein Verstärkungsteil für einen Türkantenschutz, ein Verstärkungsteil für einen Türunterkantenschutz, ein Verstärkungsteil für eine Abdeckleiste, ein Verstärkungsteil für eine Säulenblende, ein Verstärkungsteil für eine Seitenschutzleiste, ein Verstärkungsteil für eine Schwellerverkleidung, ein Verstärkungsteil für eine Stoßfängerverkleidung, ein Verstärkungsteil für eine Türverkleidung, ein Verstärkungsteil für eine Heckklappe, ein Verstärkungsteil für einen Kotflügel, ein Verstärkungsteil für einen Spoiler, ein Verstärkungsteil für eine Dachbeplankung, ein Verstärkungsteil für eine Halteschiene, ein Verstärkungsteil für eine Dichtungsleiste oder ein Verstärkungsteil für eine Wasserkastenabdeckung sein.

Das Kunststoff-Bauteil und/oder das weitere Bauteil kann oder können mit wenigstens einer Lackschicht versehen sein. Insbesondere die vorstehend genannten Beispiele für das Kunststoff-Bauteil oder das weitere Bauteil kann oder können mit wenigstens einer Lackschicht versehen sein.

Der Schritt des Anordnens der Verklebungsfläche des Kunststoff-Bauteiles in Relation zu der Verklebungsfläche des weiteren Bauteils in einer Position in der sich die Verklebungsflächen gegenüberliegen, kann mittels eines das Kunststoff-Bauteil und/oder das weitere Bauteil aufnehmenden und lagefixierenden Werkzeuges erfolgen. Bei dem Werkzeug kann es sich insbesondere um ein Spannwerkzeug handeln.

Der die Mikrowellenstrahlung bereitstellende Halbleiter-Mikrowellengenerator kann hierbei bevorzugt in das Werkzeug integriert sein. Weiter bevorzugt sind wenigstens zwei Halbleiter-Mikrowellengeneratoren in dem Werkzeug integriert, wobei die Halbleiter-Mikrowellengeneratoren beabstandet zueinander angeordnet sind. Aufgrund der geringen Baugröße eines Halbleiter-Mikrowellengenerators können anstelle einer einzelnen großen Mikrowellenquelle eine Vielzahl von deutlich kleineren Halbleiter-Mikrowellengeneratoren vorgesehen werden.

Der Klebstoff kann Polyurethan umfassen oder durch Polyurethan gebildet sein. Aufgrund der polaren Anteile in Polyurethan eignet sich dieses Material besonders als Mikrowellenstrahlung absorbierender Klebstoff.

Der Klebstoff kann Mikrowellenstrahlung absorbierende Zusätze enthält. Die Zusätze übertragen die absorbierte Energie der Mikrowellenstrahlung über Wärmeleitung in den Klebstoff. Diese Zusätze können die Mikrowellenstrahlung entweder alleine oder zusätzlich zu dem Material des Klebstoffes absorbieren.

Es kann nur ein Teil oder es können nur Teile des applizierten Klebstoffes durch Bestrahlen des Teils oder der Teile des Klebstoffes mit der bereitgestellten Mikrowellenstrahlung erwärmt und/oder ausgehärtet werden. Dies bedeutet, dass nicht der gesamte applizierte Klebstoff durch ein Bestrahlen des Klebstoffes mit der bereitgestellten Mikrowellenstrahlung erwärmt und oder ausgehärtet wird, sondern nur abschnittsweise oder bereichsweise von der bereitgestellten Mikrowellenstrahlung erwärmt und/oder ausgehärtet wird. Der Rest des applizierten Klebstoffes härtet dann in üblicherweise bei Raumtemperatur oder leicht erhöhter Temperatur aus. Die Umsetzung des erfindungsgemäßen Verfahrens bewirkt für diesen Fall, dass das Kunststoff-Bauteil mit dem weiteren Bauteil punktuell oder abschnittsweise stoffschlüssig verbunden wird, wobei dies ausreicht um dem Verbund eine genügende Handlingsfestigkeit für den weiteren Verarbeitungsprozess oder Transport zu verleihen. Gleichzeitig verringert sich der Eintrag von Energie und Wärme in das Kunststoff-Bauteil und das weitere Bauteil, sodass das Risiko einer thermischen Schädigung sowie der thermische Verzug deutlich minimiert wird. Insbesondere bei Einsatz von mehreren Halbleiter-Mikrowellengeneratoren lässt sich diese punktuelle oder abschnittsweise Aushärtung des Klebstoffes besonders gut realisieren.

Die Erfindung umfasst ferner ein Werkzeug zur Durchführung des Verfahrens nach einem der Ansprüche 1 bis 10 oder zur Durchführung des vorstehend beschriebenen Verfahrens, wobei das Werkzeug dem Schritt des Anordnens der Verklebungsfläche des Kunststoff-Bauteiles in Relation zu der Verklebungsfläche des weiteren Bauteils in einer Position in der sich die Verklebungsflächen gegenüberliegen dient. Das Werkzeug weist hierfür einen Aufnahmebereich für das Kunststoff-Bauteil und/oder das weitere Bauteil auf, um das Kunststoff-Bauteil und/oder das weitere Bauteil in dem Werkzeug aufnehmen und lagefixieren zu können. Erfindungsgemäß ist in dem Werkzeug wenigstens ein die Mikrowellenstrahlung bereitstellender Halbleiter-Mikrowellengenerator integriert.

In dem Werkzeug können im Strahlengang des Halbleiter-Mikrowellengenerators eine Störbrücke oder mehrere Störbrücken zum gezielten Streuen der Mikrowellenstrahlung vorgesehen sein. Die Störbrücke kann oder die Störbrücken können als Metallplättchen ausgebildet sein. Die Störbrücke oder die Störbrücken können über eine Aufhängung mit dem Werkzeug verbunden sein. Bevorzugt sind bei mehreren Störbrücken die Störbrücken in Strahlungsrichtung der Mikrowellenstrahlung hintereinander und versetzt zueinander angeordnet.

Hierbei ist bevorzugt der wenigstens eine Halbleiter-Mikrowellengenerator, insbesondere die Antenne des Halbleiter-Mikrowellengenerators, in dem Bereich oder in den Bereichen des Werkzeuges integriert, die sich im Bereich der anzuordnenden Verklebungsfläche des Kunststoff-Bauteils und/oder im Bereich der anzuordnenden weiteren Verklebungsfläche des weiteren Bauteils befinden. Weiter bevorzugt sind wenigstens zwei Halbleiter-Mikrowellengeneratoren vorgesehen, die oder deren Antennen in dem Bereich oder in den Bereichen des Werkzeugs integriert sind, die sich im Bereich der anzuordnenden Verklebungsfläche des Kunststoff-Bauteils und/oder im Bereich der anzuordnenden weiteren Verklebungsfläche des weiteren Bauteils befinden. In einem entsprechend ausgebildeten Werkzeug kann nur ein Teil oder können nur Teile des applizierten Klebstoffes durch bestrahlen des Teils oder der Teile des Klebstoffes mit der bereitgestellten Mikrowellenstrahlung erwärmt und/oder ausgehärtet werden.

Das Kunststoffmaterial des Kunststoff-Bauteils kann Polytetrafluorethylen (PTFE), Polycarbonat (PC), Styrol-Acrylnitril-Copolymer (SAN), Ethylen-Propylen-Dien-Kautschuk (EPDM), Acrylnitril-Butadien-Styrol (ABS), Polyethylen (PE), Polypropylen (PP), Acrylnitril-Styrol-Acrylat-Copolymere (ASA) oder Mischungen der vorgenannten Materialen umfassen. Sämtliche vorgenannten Kunststoffmaterialien oder Mischungen von Kunststoffmaterialien können zudem Verstärkungsfasern oder Verstärkungspartikel aufweisen.

Bevorzugt umfasst das Material des weiteren Bauteils ebenfalls eines oder eine Mischung der vorgenannten Materialien. Bevorzugt ist das Material des weiteren Bauteils artgleich oder identisch zu dem Kunststoffmaterial des Kunststoff-Bauteils. Das Material des weiteren Bauteils kann ebenfalls Verstärkungsfasern oder Verstärkungspartikel aufweisen.

Die Erfindung wird anhand lediglich Ausführungsbeispiele darstellender Figuren näher erläutert.

Es zeigen:
- Fig. 1 und 2:: ein Beispiel eines Kunststoff-Bauteils und eines weiteren Bauteils;
- Fig. 3 bis 8:: ein erfindungsgemäßes Werkzeug und Teilschritte des erfindungsgemäßen Verfahrens;
- Fig. 9 bis 10:: Draufsichten auf das erfindungsgemäße Werkzeug;
- Fig. 11:: eine Querschnittsdarstellung aus Fig. 7;
- Fig. 12:: eine detaillierte Darstellung eines Querschnitts einer weiteren Variante des Kunststoff-Bauteils / des weiteren Bauteils;
- Fig.13 bis 14:: Draufsichten auf eine weitere Variante eines erfindungsgemäßen Werkzeugs;
- Fig. 15:: eine Schnittdarstellung des Werkzeuges aus Fig. 13 und Fig. 14.

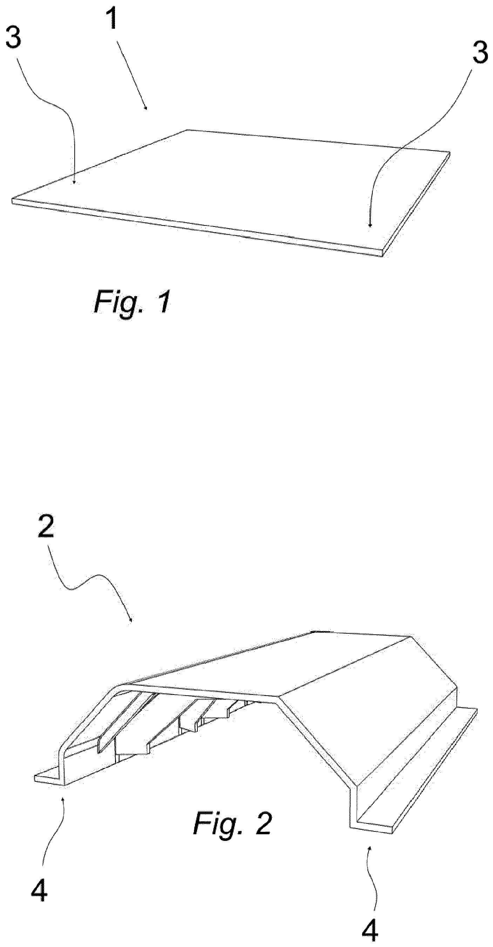

In Fig. 2 ist als Beispiel für ein weiteres Bauteil 2 ein U-förmig gebogener Kanal mit Versteifungsrippen dargestellt. Das weitere Bauteil 2 dient insbesondere zur Veranschaulichung eines Verstärkungsteils für das Kunststoff-Bauteil 1. In der Fig. 1 ist als Beispiel eines Kunststoff-Bauteils 1 aus einem für Mikrowellenstrahlung transparenten Kunststoffmaterial eine den U-Kanal verschließende Platte dargestellt. Das Kunststoff-Bauteil 1 weist mehrere für eine Verklebung geeignete Verklebungsflächen 3 auf. Das weitere Bauteil 2 weist ebenfalls für eine Verklebung geeignete weitere Verklebungsflächen 4 auf. Die Fig. 1 und die Fig. 2 bilden insofern die Schritte des Bereitstellens eines Kunststoff-Bauteils 1 aus einem für Mikrowellenstrahlung transparenten Kunststoffmaterial, wobei das Kunststoff-Bauteil 1 wenigstens eine für eine Verklebung geeignet der Verklebungsfläche 3 aufweist und des Bereitstellens wenigstens eines weiteren Bauteils 2, wobei das weitere Bauteil 2 wenigstens eine für eine Verklebung geeignet weitere Verklebungsfläche 4 aufweist.

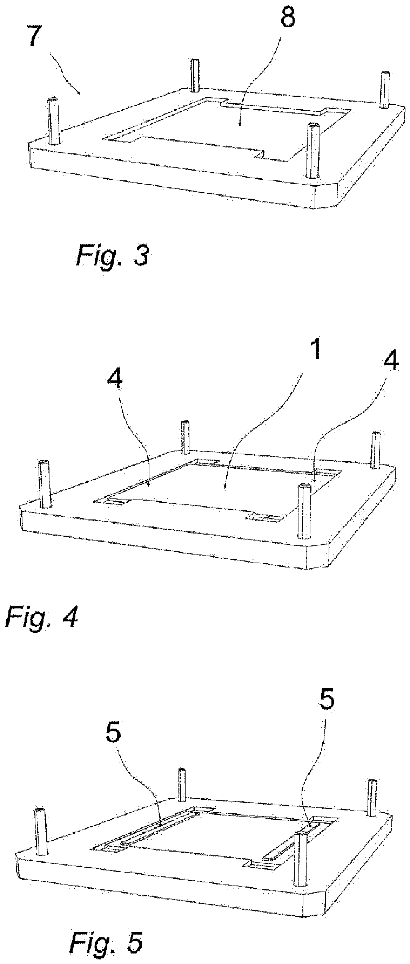

In Fig. 3 ist ein Teil eines Werkzeuges 7 zur Durchführung des erfindungsgemäßen Verfahrens dargestellt. Das Werkzeug 7 weist einen Aufnahmebereich 8 für das Kunststoff-Bauteil 1 auf. In Fig. 4 ist entsprechend dargestellt, wie das Kunststoff-Bauteil 1 in dem Aufnahmebereich 8 des Werkzeugs 7 aufgenommen und Lage fixiert ist.

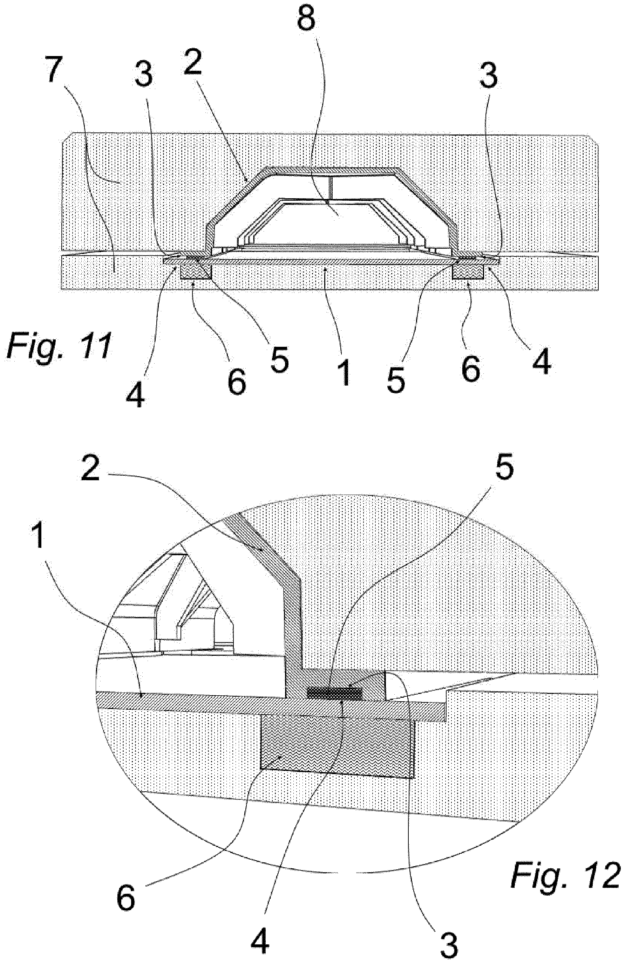

In Fig. 5 ist eine erste Variante des Applizierens eines eine Mikrowellenstrahlung absorbieren den Klebstoffes 5 auf die Verklebungsfläche 3 des Kunststoff-Bauteils 1 dargestellt. Alternativ oder zusätzlich könnte in entsprechender Weise das Applizieren eines eine Mikrowellenstrahlung absorbierenden Klebstoffes 5 auch auf die Verklebungsfläche 4 des weiteren Bauteils 2 erfolgen. Eine weitere Variante dieses Verfahrensschritts ist in Fig. 12 dargestellt.

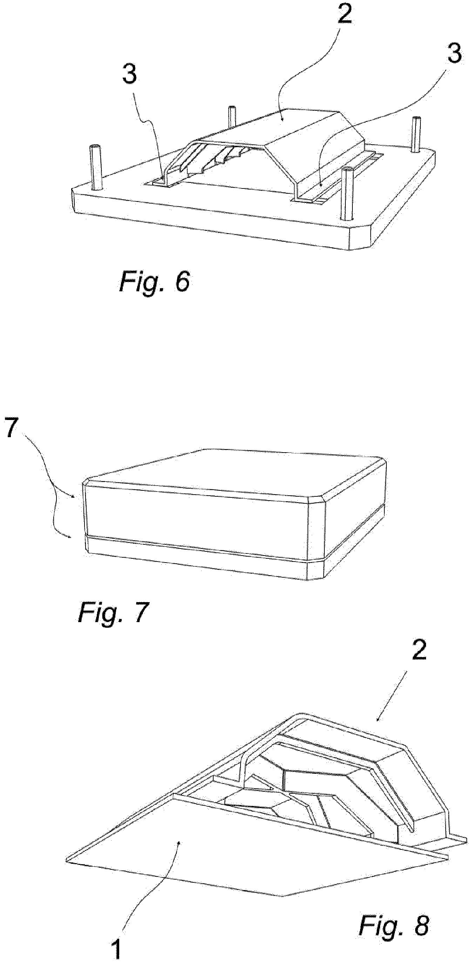

In Fig. 6 und in Fig. 7 ist der Schritt des Anordnens der Verklebungsfläche 3 des Kunststoff-Bauteils 1 in Relation zu der Verklebungsfläche 4 des weiteren Bauteils 2 in einer Position in der sich die Verklebungsflächen 3, 4 gegenüberliegen dargestellt. In Fig. 7 ist ein hierfür eingesetzter weiterer Teil des Werkzeugs 7 erkennbar der einen Aufnahmebereich 8 für das weitere Bauteil 2 aufweist. In Fig. 6 und Fig. 7 ist ferner der Schritt des Verbindens der beiden Verklebungsflächen 3, 4 durch den applizierten Klebstoff 5 erkennbar. Hier erfolgt ebenfalls der Schritt des Bereitstellens von Mikrowellenstrahlung im Bereich der Verklebungsflächen 3, 4 und Erwärmen und/oder Aushärten des Klebstoffes 5 durch das Bestrahlen des Klebstoffes 5 mit der bereitgestellten Mikrowellenstrahlung, um die stoffschlüssige Verbindung zwischen dem Kunststoff-Bauteil 1 und dem weiteren Bauteil 2 zu realisieren. Das Bereitstellen der Mikrowellenstrahlung erfolgt hierbei mittels wenigstens eines Halbleiter-Mikrowellengenerators 6.

In Fig. 8 ist das mittels des Verfahrens stoffschlüssig verbundenen Kunststoff-Bauteil 1 mit dem weiteren Bauteil 2 dargestellt.

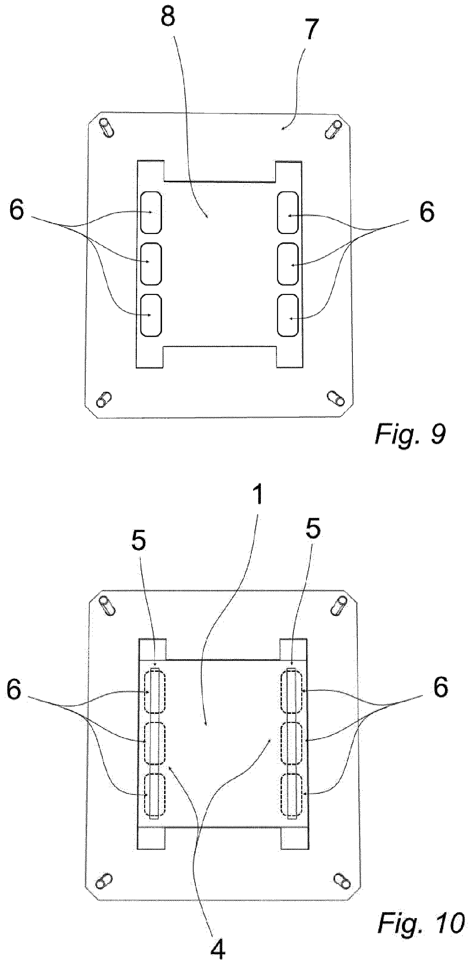

In der Fig. 9 sind die Positionen der in dem Werkzeug 7 integrierten Halbleiter-Mikrowellengeneratoren 6 und/oder die Antennen der Halbleiter-Mikrowellengeneratoren 6 dargestellt. Diese sind wie in Fig. 10 ersichtlich in dem Bereich oder in den Bereichen des Werkzeugs integriert, die sich im Bereich der anzuordnenden Verklebungsfläche 3 des Kunststoff-Bauteils 1 und/oder im Bereich der anzuordnenden weiteren Verklebungsfläche 4 des weiteren Bauteils 2 befinden.

In Fig. 11 ist eine Schnittdarstellung durch das in Fig. 7 dargestellte Werkzeug 7 und das darin befindliche Kunststoff-Bauteil 1 und das weitere Bauteil 2 erkennbar. Wie ersichtlich erfolgt der Schritt des Anordnens der Verklebungsfläche 3 des Kunststoff-Bauteiles 1 in Relation zu der Verklebungsfläche 4 des weiteren Bauteils 2 in einer Position in der sich die Verklebungsflächen 3, 4 gegenüberliegen, mittels des das Kunststoff-Bauteil 1 und das weitere Bauteil 2 aufnehmende und lagefixierende Werkzeug 7. Hierbei sind die die Mikrowellenstrahlung bereitstellenden Halbleiter-Mikrowellengeneratoren 6 in das Werkzeug 7 integriert. Hierbei sind mehrere d. h. wenigstens zwei Halbleiter-Mikrowellengeneratoren 6 in dem Werkzeug integriert, wobei diese Halbleiter-Mikrowellengeneratoren 6 beabstandet zueinander angeordnet sind.

In Fig. 12 ist eine Variante im Ablauf der Schrittreihenfolge des erfindungsgemäßen Verfahrens dargestellt. Hierbei erfolgt zunächst das Anordnen der Verklebungsfläche 3 des Kunststoff-Bauteils 1 in Relation zu der Verklebungsfläche 4 des weiteren Bauteils 2 in einer Position in der sich die Verklebungsflächen 3, 4 gegenüberliegen. Erst dann erfolgt das Applizieren eines eine Mikrowellenstrahlung absorbierenden Klebstoffes 5 auf die Verklebungsfläche 3 des Kunststoffbauteils 1 und auf die weitere Verklebungsfläche 4 des weiteren Bauteils 2. Hierzu wird der Klebstoff 5 in den sich zwischen der Verklebungsfläche 3 des Kunststoff-Bauteils 1 und der Verklebungsfläche 4 des weiteren Bauteils 2 gebildeten Kanal eingebracht.

Wie in Fig. 9 bis 12 ersichtlich, wird oder werden nur ein Teil oder nur Teile des applizierten Klebstoffes 5 durch Bestrahlen des Teils oder der Teile des Klebstoffes 5 mit der bereitgestellten Mikrowellenstrahlung erwärmt und/oder ausgehärtet.

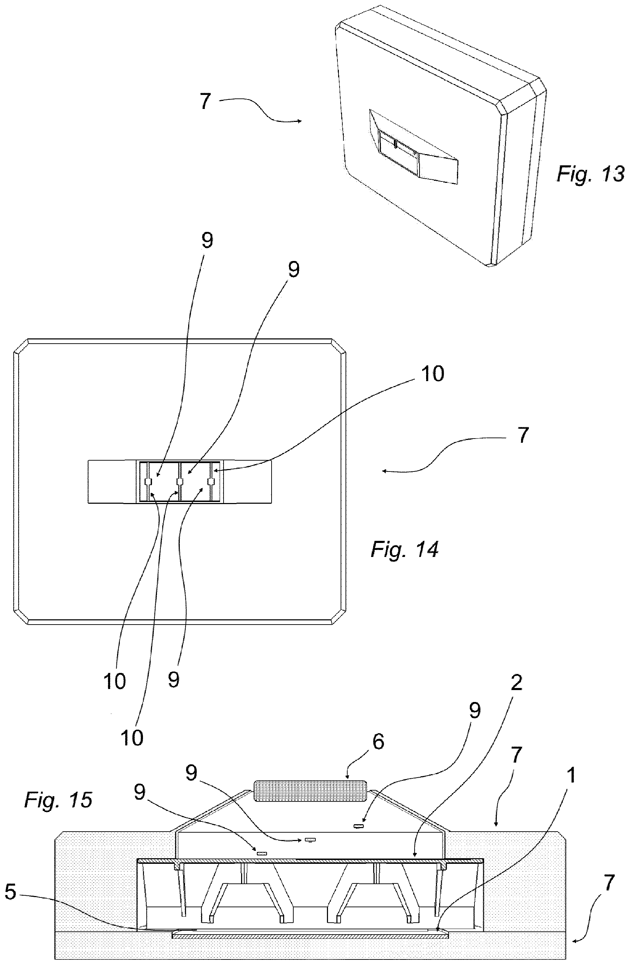

In den Fig. 13 bis Fig. 15 ist eine weitere Variante eines erfindungsgemäßen Werkzeuges 7 dargestellt. In Fig. 13 ist eine perspektivische Darstellung und in Fig. 14 eine Draufsicht zu sehen, bei denen aus Gründen der Sichtbarkeit der Halbleiter-Mikrowellengeneratoren 6 ausgeblendet ist. In diesem Werkzeug 7 sind im Strahlengang des Halbleiter-Mikrowellengenerators 6 mehrere Störbrücken 9 zum gezielten Streuen der Mikrowellenstrahlung vorgesehen. Die Störbrücken 9 sind hierbei als Metallplättchen 9 ausgebildet, die über eine Aufhängung 10 mit dem Werkzeug verbunden sind. In Strahlungsrichtung der Mikrowellenstrahlung sind die Störbrücken 9 bzw. sind die Metallplättchen 9 hintereinander und versetzt zueinander angeordnet (vgl. Schnittdarstellung in Fig. 15). Mittels der Störbrücken 9 lassen sich insbesondere gezielt weitere Resonanzfrequenzen erzeugen, die eine weiter verbesserte Energieverteilung in die Verklebungsfläche 3 und in dem Klebstoff 5 ermöglichen. In Fig. 15 ist die Verklebungsfläche 3 bzw. der Klebstoff 5 nicht-geschnitten dargestellt und befindet sich in der Bildebene hinter der Schnittfläche.

Für alle vorstehend beschriebenen Beispiele kann gelten, dass das Kunststoff-Bauteil 1 ein Verkleidungsteil für ein Kraftfahrzeug, insbesondere eine Radlaufblende, eine Zierleiste, ein Zierelement, ein Türkantenschutz, ein Türunterkantenschutz, eine Abdeckleiste, eine Säulenblende, eine Seitenschutzleiste, eine Schwellerverkleidung, eine Stoßfängerverkleidung, eine Türverkleidung, eine Heckklappe, ein Kotflügel, ein Spoiler, eine Dachbeplankung, eine Halteschiene, eine Dichtungsleiste oder eine Wasserkastenabdeckung sein kann. Das weitere Bauteil 2 kann ein Verstärkungsteil für ein Verkleidungsteil eines Kraftfahrzeuges, insbesondere ein Verstärkungsteil für eine Radlaufblende, ein Verstärkungsteil für eine Zierleiste, ein Verstärkungsteil für ein Zierelement, ein Verstärkungsteil für einen Türkantenschutz, ein Verstärkungsteil für einen Türunterkantenschutz, ein Verstärkungsteil für eine Abdeckleiste, ein Verstärkungsteil für eine Säulenblende, ein Verstärkungsteil für eine Seitenschutzleiste, ein Verstärkungsteil für eine Schwellerverkleidung, ein Verstärkungsteil für eine Stoßfängerverkleidung, ein Verstärkungsteil für eine Türverkleidung, ein Verstärkungsteil für eine Heckklappe, ein Verstärkungsteil für einen Kotflügel, ein Verstärkungsteil für einen Spoiler, ein Verstärkungsteil für eine Dachbeplankung, ein Verstärkungsteil für eine Halteschiene, ein Verstärkungsteil für eine Dichtungsleiste oder ein Verstärkungsteil für eine Wasserkastenabdeckung sein. Das Kunststoff-Bauteil 1 und/oder das weitere Bauteil 2 kann oder können mit wenigstens einer Lackschicht versehen sein. Der Klebstoff 5 kann Polyurethan umfassen oder durch Polyurethan gebildet sein. Der Klebstoff 5 kann ergänzend oder alternativ Mikrowellenstrahlung absorbierende Zusätze enthalten. Die Frequenz der Mikrowellenstrahlung liegt bevorzugt im Bereich von 2,45 GHz bis 5,8 GHz.

## Patentansprüche

1. Verfahren zum stoffschlüssigen Verbinden eines Kunststoff-Bauteiles (1) mit einem weiteren Bauteil (2), umfassend die folgenden Schritte:
- Bereitstellen eines Kunststoff-Bauteiles (1) aus einem für Mikrowellenstrahlung transparenten Kunststoffmaterial, wobei das Kunststoff-Bauteil (1) wenigstens eine für eine Verklebung geeignete Verklebungsfläche (3) aufweist,
- Bereitstellen wenigstens eines weiteren Bauteils (2), wobei das weitere Bauteil (2) wenigstens eine für eine Verklebung geeignete weitere Verklebungsfläche (4) aufweist,
- Applizieren eines eine Mikrowellenstrahlung absorbierenden Klebstoffes (5) auf die Verklebungsfläche (3) des Kunststoffbauteils (1) und/oder auf die weitere Verklebungsfläche (4) des weiteren Bauteils (2),
- Anordnen der Verklebungsfläche (3) des Kunststoff-Bauteiles (1) in Relation zu der Verklebungsfläche (4) des weiteren Bauteils (2) in einer Position in der sich die Verklebungsflächen (3, 4) gegenüberliegen,
- Verbinden der beiden Verklebungsflächen (3, 4) durch den applizierten Klebstoff (5),
- Bereitstellen von Mikrowellenstrahlung im Bereich der Verklebungsflächen (3, 4) und Erwärmen und/oder Aushärten des Klebstoffes (5) durch Bestrahlen des Klebstoffes (5) mit der bereitgestellten Mikrowellenstrahlung, um die stoffschlüssige Verbindung zwischen dem Kunststoff-Bauteil (1) und dem weiteren Bauteil (2) zu realisieren,
**dadurch gekennzeichnet, dass**
das Bereitstellen der Mikrowellenstrahlung mittels wenigstens eines Halbleiter-Mikrowellengenerators (6) erfolgt.

2. Verfahren nach Anspruch 1, **dadurch gekennzeichnet, dass** das Kunststoff-Bauteil (1) ein Verkleidungsteil für ein Kraftfahrzeug, insbesondere eine Radlaufblende, eine Zierleiste, ein Zierelement, ein Türkantenschutz, ein Türunterkantenschutz, eine Abdeckleiste, eine Säulenblende, eine Seitenschutzleiste, eine Schwellerverkleidung, eine Stoßfängerverkleidung, eine Türverkleidung, eine Heckklappe, ein Kotflügel, ein Spoiler, eine Dachbeplankung, eine Halteschiene, eine Dichtungsleiste oder eine Wasserkastenabdeckung ist.

3. Verfahren nach einem der vorstehenden Ansprüche, **dadurch gekennzeichnet, dass** das weitere Bauteil (2) ein Verstärkungsteil für ein Verkleidungsteil eines Kraftfahrzeuges, insbesondere ein Verstärkungsteil für eine Radlaufblende, ein Verstärkungsteil für eine Zierleiste, ein Verstärkungsteil für ein Zierelement, ein Verstärkungsteil für einen Türkantenschutz, ein Verstärkungsteil für einen Türunterkantenschutz, ein Verstärkungsteil für eine Abdeckleiste, ein Verstärkungsteil für eine Säulenblende, ein Verstärkungsteil für eine Seitenschutzleiste, ein Verstärkungsteil für eine Schwellerverkleidung, ein Verstärkungsteil für eine Stoßfängerverkleidung, ein Verstärkungsteil für eine Türverkleidung, ein Verstärkungsteil für eine Heckklappe, ein Verstärkungsteil für einen Kotflügel, ein Verstärkungsteil für einen Spoiler, ein Verstärkungsteil für eine Dachbeplankung, ein Verstärkungsteil für eine Halteschiene, ein Verstärkungsteil für eine Dichtungsleiste oder ein Verstärkungsteil für eine Wasserkastenabdeckung ist.

4. Verfahren nach einem der vorstehenden Ansprüche, **dadurch gekennzeichnet, dass** das Kunststoff-Bauteil (1) und/oder das weitere Bauteil (2) mit wenigstens einer Lackschicht versehen ist oder sind.

5. Verfahren nach einem der vorstehenden Ansprüche, **dadurch gekennzeichnet, dass** der Schritt des Anordnens der Verklebungsfläche (3) des Kunststoff-Bauteiles (1) in Relation zu der Verklebungsfläche (4) des weiteren Bauteils (2) in einer Position in der sich die Verklebungsflächen (3, 4) gegenüberliegen, mittels eines das Kunststoff-Bauteil (1) und/oder das weitere Bauteil (2) aufnehmenden und lagefixierenden Werkzeuges (7) erfolgt.

6. Verfahren nach Anspruch 5, **dadurch gekennzeichnet, dass** der die Mikrowellenstrahlung bereitstellende Halbleiter-Mikrowellengenerator (6) in das Werkzeug (7) integriert ist.

7. Verfahren nach Anspruch 6, **dadurch gekennzeichnet, dass** wenigstens zwei Halbleiter-Mikrowellengeneratoren (6) in dem Werkzeug integriert sind, wobei die Halbleiter-Mikrowellengeneratoren (6) beabstandet zueinander angeordnet sind.

8. Verfahren nach einem der vorstehenden Ansprüche, **dadurch gekennzeichnet, dass** der Klebstoff (5) Polyurethan umfasst oder durch Polyurethan gebildet ist.

9. Verfahren nach einem der vorstehenden Ansprüche, **dadurch gekennzeichnet, dass** der Klebstoff (5) Mikrowellenstrahlung absorbierende Zusätze enthält.

10. Verfahren nach einem der vorstehenden Ansprüche, **dadurch gekennzeichnet, dass** nur ein Teil oder nur Teile des applizierten Klebstoffes (5) durch Bestrahlen des Teils oder der Teile des Klebstoffes (5) mit der bereitgestellten Mikrowellenstrahlung erwärmt und/oder ausgehärtet wird oder werden.

11. Werkzeug zur Durchführung des Verfahrens nach einem der Ansprüche 1 bis 10, wobei das Werkzeug (7) dem Schritt des Anordnens der Verklebungsfläche (3) des Kunststoff-Bauteiles (1) in Relation zu der Verklebungsfläche (4) des weiteren Bauteils (2) in einer Position in der sich die Verklebungsflächen (3, 4) gegenüberliegen dient und, wobei das Werkzeug (7) hierfür einen Aufnahmebereich (8) für das Kunststoff-Bauteil (1) und/oder das weitere Bauteil (2) aufweist, um das Kunststoff-Bauteil (1) und/oder das weitere Bauteil (2) in dem Werkzeug (7) aufnehmen und lagefixieren zu können,
**dadurch gekennzeichnet, dass**
in dem Werkzeug (7) wenigstens ein die Mikrowellenstrahlung bereitstellender Halbleiter-Mikrowellengenerator (6) integriert ist

12. Werkzeug nach Anspruch 11, **dadurch gekennzeichnet, dass** der wenigstens eine Halbleiter- Mikrowellengenerator in dem Bereich oder in den Bereichen des Werkzeuges integriert ist, die sich im Bereich der anzuordnenden Verklebungsfläche (3) des Kunststoff-Bauteils (1) und/oder im Bereich der anzuordnenden weiteren Verklebungsfläche (4) des weiteren Bauteils (2) befinden.
